(19) **Europäisches Patentamt / European Patent Office / Office européen des brevets**

(11) **EP 1 561 785 B1**

(12) **EUROPEAN PATENT SPECIFICATION**

(45) Date of publication and mention
of the grant of the patent:
**10.04.2013 Bulletin 2013/15**

(51) Int Cl.:
***C08L 67/04*** (2006.01)     ***C08K 5/10*** (2006.01)
***C08K 5/29*** (2006.01)

(21) Application number: **03758768.0**

(22) Date of filing: **22.10.2003**

(86) International application number:
**PCT/JP2003/013475**

(87) International publication number:
**WO 2004/037925 (06.05.2004 Gazette 2004/19)**

(54) **RESIN COMPOSITION AND MOLDED OBJECT FORMED FROM THE RESIN COMPOSITION**

HARZZUSAMMENSETZUNG UND DARAUS GEBILDETER FORMKÖRPER

COMPOSITION DE RESINE ET OBJET MOULE FORME A PARTIR DE CELLE-CI

(84) Designated Contracting States:
**DE FR GB IT**

(30) Priority: **22.10.2002   JP 2002306642**
          **13.03.2003   JP 2003068387**
          **21.08.2003   JP 2003297209**
          **22.10.2003   JP 2003361345**

(43) Date of publication of application:
**10.08.2005   Bulletin 2005/32**

(73) Proprietor: **MITSUBISHI PLASTICS, INC.**
**Tokyo 100-0005 (JP)**

(72) Inventors:
  • **TANAKA, Kazuya,**
  **c/o Mitsubishi Plastics, INC.**
  **Nagahama-shi,**
  **Shiga 526-8660 (JP)**

  • **TAKAGI, Jun,**
  **c/o Mitsubishi Plastics, INC.**
  **Nagahama-shi,**
  **Shiga 526-8660 (JP)**
  • **OHASHI, Akihiro,**
  **c/o Mitsubishi Plastics, INC.**
  **Nagahama-shi,**
  **Shiga 526-8660 (JP)**
  • **KATO, Yukio,**
  **c/o Mitsubishi Plastics, INC.**
  **Hiratsuka-shi,Kanagawa 254-0019 (JP)**

(74) Representative: **Albrecht, Thomas et al**
**Kraus & Weisert**
**Patent- und Rechtsanwälte**
**Thomas-Wimmer-Ring 15**
**80539 München (DE)**

(56) References cited:
**EP-A- 1 033 383     JP-A- 2002 128 918**
**JP-A- 2003 261 756     US-A- 5 883 199**

**Description**

TECHNICAL FIELD

The present invention relates to a resin composition having biodegradability and to injection molded articles therefrom.

BACKGROUND ART

Currently, plastics are used widely in everyday life and in every field of industry. The amount of plastics produced a year in the whole world reaches about a hundred million tons. Most of the plastics are discarded after use, which causes a problem of disposal of the discarded plastics , such as burning or landfilling. Moreover, exhaustion of petroleum resources which are raw materials of plastics is concerned about. Thus, the disposal of the plastics is now becoming a global environmental problem.

Accordingly, plastics that have a reduced impact on the environment are demanded and as such plastics, materials that are biodegraded and disappear with time under natural environment, and do not start from exhausting resources are being studied. Currently plastics made from plant materials have attracted attention as such materials. The plastics made from plant materials have also advantages that they are excellent in recyclability and utilize recycling-oriented resources.

Among the plastics made from plant materials, in particular lactic acid based resins are obtained from lactic acid that is obtained by fermentation of starch as the starting material and can be mass-produced by chemical engineering. Moreover, the lactic acid based resins have various excellentproperties such as excellent transparency, rigidity, and heat resistance. Therefore, the lactic acid based resins are now increasingly used as substitute materials for polystyrene (PS), polyethylene terephthalate (PET) in the field of films and injection molding.

However, the lactic acid based resins have relatively low impact strength as compared with ABS resins that are used for home electric appliance parts, automobile parts, and injection moldings, therefore the lactic acid based resins can not be used as substitute materials for ABS resins.

To improve the impact resistance of the lactic acid based resins, it is known to add a fatty acid ester and perform crystallization treatment (see, for example, Japanese Patent Application Laid-open Publication No. Hei11-116784). In this technology, although the fatty acid ester serves as a nucleating agent to improve the impact resistance of the resin, the fatty acid ester also serves as a plasticizer to lead to a considerable reduction in heat resistance of the resin. Moreover, the fatty acid ester leads to a reduction in elastic modulus of the lactic acid based resins at room temperature, the obtained resin can not be used as those applications that require rigidity.

Among further prior art, JP 2002-128918 discloses a resin composition consisting of 40 wt. -% each of two different polylactic acid polymers and 20 wt. -% of an aromatic aliphatic polyester having improved impact resistance.

Japanese Patent Application Laid-open Publication No. Hei 10-87976 discloses blending aliphatic polyesters, such as polybutylene succinate and polybutylene succinate/adipate copolymer, having a glass transition temperature (Tg) of 0°C or less can improve impact resistance of the lactic acid based resins. The aliphatic polyesters have a heat of crystal melting ($\Delta$Hm) higher than 30 J/g, and hence they are highly crystalline. This means that the percentage of the non-crystalline portion in the aliphatic polyester that is responsible to the improvement of the impact resistance is small. Accordingly, the blending amount of such aliphatic polyester must increase to improve the impact resistance. However, when the blending amount of the aliphatic polyesters other than the lactic acid based resin increases, the resultant moldings will become flexible or have decreased heat resistance. Moreover, the lactic acid based resins are being produced on a large scale industrially and are advantageous from viewpoints of providing starting materials and of cost. Therefore, when the blending amount of the lactic acid based resins are used more to form the injection molded articles, the products can be provided more stably and more economically.

Moreover, when the molded articles made from the lactic acid based resins are stored for a long period of time or used for a relatively long period of time, the aliphatic polyester based resins have big problems in practice, for example, that they are hydrolyzed with moisture from water vapor in the air or from outside, or moisture from the content housed in the molded articles to lead to a reduction in the mechanical properties. In particular, in the environment of high temperature and high humidity, for example, 60°C or more and 60% RH or more, the aliphatic polyesters are hydrolyzed in a short time and may become unusable in from several hours to several weeks.

DISCLOSURE OF THE INVENTION

Accordingly, in view of the above-points, it is an object of the present invention to provide a resin composition that has excellent impact resistance and excellent heat resistance without substantially deteriorating biodegradability that the lactic acid based resin has inherently.

To achieve the above-mentioned object, under the circumstances the inventors of the present invention have made extensive studies and as a result, the present invention has been accomplished.

That is, the present invention provides: a resin composition comprising (A), (B) and (C):

(A) a lactic acid based resin;

(B) an aromatic aliphatic polyester having a glass transition temperature (Tg) of 0°C or less and a heat of crystal melting (ΔHm) of 5 J/g to 30 J/g, wherein the aromatic aliphatic polyester is a polyester having introduced an aromatic ring between aliphatic chains, and/or an aliphatic polyester other than the lactic acid based resin, having a glass transition temperature (Tg) of 0°C or less and a heat of crystal melting (ΔHm) of 5 J/g to 30 J/g, and wherein the component (B), which component (B) is said aromatic aliphatic polyester and/or said aliphatic polyester other than the lactic acid based resin, has a content of 5 mass% to 25 mass%; and

(C) an aliphatic polyester other than the lactic acid based resin, having a glass transition temperature (Tg) of 0°C or less and a heat of crystal melting of 50 J/g to 70 J/g, wherein said glass transition temperature and said heat of crystal melting (ΔHm) are measured in accordance with JIS-K 7121.

Further, the resin composition may further include (D) an inorganic filler having a mean particle size of 1 μm to 5 μm within a range of 5 mass% to 20 mass% of the resin composition, wherein the sum of amounts of (A), (B), (C) and (D) is 100 mass%.

Still further, the resin composition may further include 0.5 mass part to 10 mass parts of a carbodiimide compound based on a total of 100 mass parts of (A) the lactic acid based resin, (B) the aromatic aliphatic polyester having a glass transition temperature (Tg) of 0°C or less and a heat of crystal melting (ΔHm) of 5 J/g to 30 J/g, and/or the aliphatic polyester other than the lactic acid based resin, having a glass transition temperature (Tg) of 0°C or less and a heat of crystal melting (ΔHm) of 5 J/g to 30 J/g, and (C) the aliphatic polyester other than the lactic acid based resin, having a glass transition temperature (Tg) of 0°C or less and a heat of crystal melting (ΔHm) of 50 J/g to 70 J/g.

Yet further, the resin composition may further include 0.5 mass part to 5 mass parts of an ester compound having a molecular weight of 200 to 2,000 based on a total of 100 mass parts of (A) the lactic acid based resin, (B) the aromatic aliphatic polyester having a glass transition temperature (Tg) of 0°C or less and a heat of crystal melting (ΔHm) of 5 J/g to 30 J/g, and/or the aliphatic polyester other than the lactic acid based resin, having a glass transition temperature (Tg) of 0°C or less and a heat of crystal melting (ΔHm) of 5 J/g to 30 J/g, and (C) the aliphatic polyester other than the lactic acid based resin, having a glass transition temperature (Tg) of 0°C or less and a heat of crystal melting (ΔHm) of 50 J/g to 70 J/g.

The resin composition may further include 0.1 mass part to 5 mass parts of a hiding power improver having a refractive index of 2.0 or more selected from the group, consisting of titanium oxide, lead titanate, potassium titanate, zirconium oxide, zinc sulfide, antimony oxide and zinc oxide, based on a total of 100 mass parts of (A) the lactic acid based resin, (B) the aromatic aliphatic polyester having a glass transition temperature (Tg) of 0°C or less and a heat of crystal melting (ΔHm) of 5 J/g to 30 J/g, and/or the aliphatic polyester other than the lactic acid based resin, having a glass transition temperature (Tg) of 0°C or less and a heat of crystal melting (ΔHm) of 5 J/g to 30 J/g, and (C) the aliphatic polyester other than the lacticd acid based resin, having a glass transition temperature (Tg) of 0°C or less and a heat of crystal melting (ΔHm) of 50 J/g to 70 J/g.

The molded article of the present invention is formed by injection molding any one of the resin compositions described above.

Here, it is preferable that the molded article formed by the injection molding be further crystallized at a temperature within a range of 60°C to 130°C.

According to the present invention, a resin composition that has excellent impact resistance and excellent heat resistance without substantially deteriorating biodegradability that the lactic acid based resin has inherently can be provided, and an injection molding article formed from the resin composition can be provided.

Moreover, according to the present invention, a resin composition that has also excellent resistance to hydrolysis and an injection molded article formed from the resin composition can be provided.

## BRIEF DESCRIPTION OF THE DRAWINGS

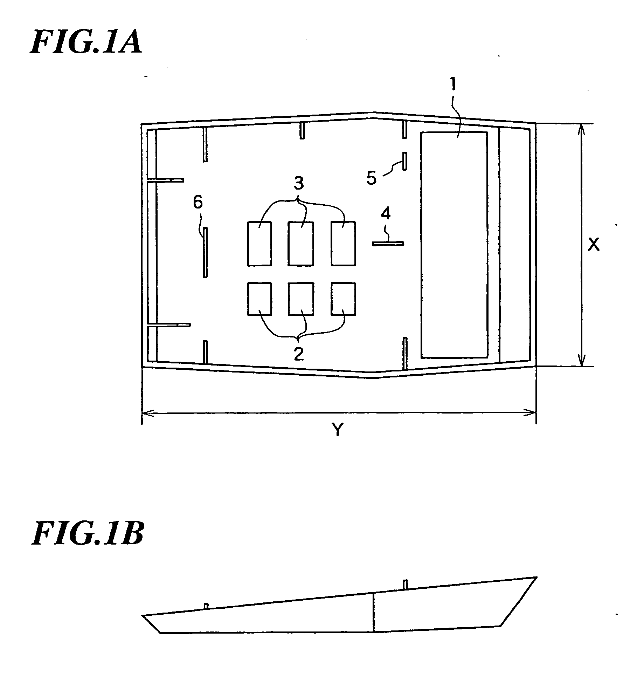

Fig. 1A is a plan view showing an injection molded article according to a first embodiment of the present invention; and Fig. 1B is a front elevational view of the injection molded article shown in Fig. 1A.

**EP 1 561 785 B1**

BEST MODE FOR CARRYING OUT THE INVENTION

Hereinafter, the present invention will be explained in detail.

The resin composition of the present invention contains components (A), (B) and (C). The first two components are (A) a lactic acid based resin; and (B) an aromatic aliphatic polyester having a glass transition temperature (Tg) of 0°C or less and a heat of crystal melting (ΔHm) of 5 J/g to 30 J/g, and/or an aliphatic polyester other than the lactic acid based resin, having a glass transition temperature (Tg) of 0°C or less and a heat of crystal melting (ΔHm) of 5 J/g to 30 J/g.

Here, (B) the aromatic aliphatic polyester having a glass transition temperature (Tg) of 0°C or less and a heat of crystal melting (ΔHm) of 5 J/g to 30 J/g, and/or the aliphatic polyester other than the lactic acid based resin, having a glass transition temperature (Tg) of 0°C or less and a heat of crystal melting (ΔHm) of 5 J/g to 30 J/g, must be contained in an amount of 5 mass% to 25 mass%, preferably 7 mass% to 20 mass%. If the content of the component (B) is less than 5 mass%, the effect of improving the impact resistance of the lactic acid can not be obtained. On the other hand, if the content of the component (B) is more than 25 mass%, the formed molded article becomes flexible or has a reduced heat resistance.

The lactic acid based resins used in the present invention include poly (L-lactic acid) whose structural unit is L-lactic acid, poly (D-lactic acid) whose structural unit is D-lactic acid, poly (DL-lactic acid) whose structural unit consists of L-lactic acid and D-lactic acid, and mixtures of two or more of these polymers.

The compositional ratios of D-lactic acid (D form) and L-lactic acid (L form) of the lactic acid based resin is preferably L form : D form = 100:0 to 90:10, or L form : D form = 0:100 to 10: 90, more preferably L form : D form = 100: 0 to 94:6, or L form : D form = 0:100 to 6: 94, or particularly preferably L form : D form = 99.5:0.5 to 94: 6, or L form : D form = 0.5: 99.5 to 6: 94. If the compositional ratio of the D form and the L form is within these ranges, the obtained sheets or molded articles can have heat resistance without difficulty and can be used in a wide variety of applications without limits.

In the present invention, lactic acid based resins that have different copolymerization ratios of the L form and the D form may be blended. In this case, it is only needed to set an average value of copolymerization ratios of the L form and the D form in a plurality of lactic acid based resins within the above-mentioned ranges. By blending the homopolymers of the L form and of the D form and the copolymer of the L form and the D form appropriately, difficulty to cause bleeding and exhibition of heat resistance can be balanced.

Polymerization methods that can be used for polymerizing lactic acid based resins include known methods such as a polycondensation method, a ring opening polymerization method. For example, in the polycondensation method, L-lactic acid, D-lactic acid, or mixtures of these can be directly subjected to dehydropolycondensation to obtain lactic acid based resins having any desired compositions.

Moreover, in the ring opening polymerization method (lactide method), lactides, which are cyclic dimers of lactic acid, are polymerized optionally using a regulator and an appropriate catalyst to obtain lactic acid based resins having any desired compositions and any desired crystallinities. The lactides include L-lactide, which is a dimer of L-lactic acid, D-lactide, which is a dimer of D-lactic acid, and DL-lactide, which is a dimer consisting of L-lactic acid and D-lactic acid. These lactides can be polymerized after mixing as necessary to obtain lactic acid based resins having any desired compositions and any desired crystallinities.

Further, the lactic acid based resins may be copolymers of the any one of the lactic acid with another hydroxycarboxylic acid unit such as α-hydroxycarboxylic acid other than the lactic acid or with an aliphatic diol and/or an aliphatic dicarboxylic acid.

Examples of the other hydroxycarboxylic acid unit include difunctional aliphatic hydroxycarboxylic acids such as optical isomers of lactic acid (D-lactic acid for L-lactic acid, or L-lactic acid for D-lactic acid), glycolic acid, 3-hydroxybutyric acid, 4-hydroxybutyric acid, 2-hydroxy-n-butyric acid, 2-hydroxy-3,3-dimethylbutyric acid, 2-hydroxy-3-methylbutyric acid, 2-methyllactic acid, and 2-hydroxycapric acid; and lactones such as caprolactone, butyrolactone, and valerolactone.

The aliphatic diols that are copolymerized with the lactic acid based resins include, for example, ethylene glycol, 1,4-butanediol, 1,4-cyclohexanedimethanol. The aliphatic dicarboxylic acids include, for example, succinic acid, adipic acid, suberic acid, sebacic acid, and dodecanedioic acid.

Further, when heat resistance is desired, a small amount of a copolymerizable component may be added. For example, nonaliphatic dicarboxylic acid such as terephthalic acid and/or a nonaliphatic diol such as an ethylene oxide adduct of bisphenol A can be used.

Still further, to increase the molecular weight of the lactic acid based resin, a small amount of a chain extender can be used. Examples of the chain extender include a diisocyanate compound, an epoxy compound, and acid anhydrides.

The lactic acid based resins that can be used in the present invention have a weight average molecular weight within the range of preferably 50,000 to 400,000, more preferably 100,000 to 250,000. If the weight average molecular weight of the lactic acid based resin is less than 50,000, the lactic acid based resin cannot substantially exhibit practically

4

useful physical properties such as mechanical properties and heat resistance. On the other hand, if the weight average molecular weight of the lactic acid based resin is more than 400,000, the lactic acid based resin may have too high a melt viscosity to exhibit acceptable molding processability.

The lactic acid based resins that can be used advantageously in the present invention include, for example, LACEA (registered trademark, manufactured by Mitsui Chemicals, Inc.) series and Nature Works (trademark) series manufactured by Cargill Dow.

The aromatic aliphatic polyester and the aliphatic polyester other than the lactic acid based resin as the component (B) that constitutes the resin composition have glass transition temperatures (Tg) of 0°C or less, respectively. These polyesters must have heats of crystal melting ($\Delta$Hm) of 5 J/g or more, more preferably 10 J/g or more, respectively. The heat of crystal melting ($\Delta$Hm) must be 30 J/g or less, preferably 25 J/g or less. If the heat of crystal melting ($\Delta$Hm) of the component (B) is more than 30 J/g, the formed molded articles become flexible or have a reduced heat resistance.

The aromatic aliphatic polyester and the aliphatic polyester other than the lactic acid based resin in the component (B) preferably have a weight average molecular weight of 10,000 to 500,000, more preferably 50,000 to 300,000, and particularly preferably 100,000 to 300,000, independently of each other. These polymers are distinguished from aliphatic polyester shaving low molecular weights that are used as plasticizers. The difference between the two is whether they decrease the glass transition temperature (Tg) of the lactic acid based resin to which they are blended.

The aromatic aliphatic polyester in the component (B) that can be used may be those having introduced an aromatic ring between aliphatic chains to decrease the crystallinity thereof. For example, these polyesters can be obtained by condensing an aromatic dicarboxylic acid component, an aliphatic dicarboxylic acid component, and an aliphatic diol component.

Examples of the aromatic dicarboxylic acid component include isophthalic acid, terephthalic acid, and 2,6-naphthalenedicarboxylic acid. Examples of the aliphatic dicarboxylic acid component include succinic acid, adipic acid, suberic acid, sebacic acid, and dodecanedioic acid. Examples of the aliphatic diol include ethylene glycol, 1,4-butanediol, and 1,4-cyclohexanedimethanol. Two or more kinds of the aromatic dicarboxylic acid component, the aliphatic dicarboxylic acid component, and the aliphatic diol component can be used.

In the present invention, the aromatic dicarboxylic acid component that is used most advantageously is terephthalic acid, the aliphatic dicarboxylic acid component that is used most advantageously is adipic acid, and the aliphatic diol component that is used most advantageously is 1,4-butanediol.

Aliphatic polyesters that consist of aliphatic dicarboxylic acids and aliphatic diols are known to be biodegradable. In order for the polyesters that consist of the aromatic dicarboxylic acid component, the aliphatic dicarboxylic acid component, and the aliphatic diol component to be biodegradable, an aliphatic chain must be present between the aromatic chains. Therefore, the aromatic dicarboxylic acid component is present in amounts of preferably 50 mol% or less.

Specific examples of the aromatic aliphatic polyester that has a glass transition temperature (Tg) of 0°C or less and a heat of crystal melting ($\Delta$Hm) of 30 J/g or less include copolymers of tetramethylene adipate and terephthalate, and copolymers of polybutylene adipate and terephthalate. The copolymer of tetramethylene adipate and terephthalate that is commercially available includes "EastarBio" manufactured by Eastman Chemicals. The copolymer of polybutylene adipate and terephthalate that is commercially available includes "Ecoflex" manufactured by BASF.

Examples of the aliphatic polyester other than the lactic acid based resin in the component (B) include polyhydroxycarboxylic acids, aliphatic polyesters obtained by condensation of aliphatic diols and aliphatic dicarboxylic acids, aliphatic polyesters obtained by ring opening polymerization of cyclic lactones, synthesized aliphatic polyesters, and aliphatic polyesters biosynthesized in bacterial cells, excepting the lactic acid based resins.

The polyhydroxycarboxylic acids that can be used in the present invention include, for example, homopolymers or copolymers of hydroxycarboxylic acids such as 3-hydroxybutyric acid, 4-hydroxybutyric acid, 2-hydroxy-n-butyric acid, 2-hydroxy-3,3-dimethyl butyric acid, 2-hydroxy-3-methylbutyric acid, and 2-hydroxycapric acid.

The aliphatic diols that can be used in the present invention include, for example, ethylene glycol, propylene glycol, 1,4-butanediol, 1,4-cyclohexanedimethanol. The aliphatic dicarboxylic acids that can be used in the present invention include succinic acid adipic acid, suberic acid, sebacic acid, and dodecanedioic acid. The aliphatic polyesters that can be obtained by polycondensing the aliphatic diols and the aliphatic dicarboxylic acids can be obtained by selecting at least one member from the above-mentioned aliphatic diols and at least one member from the above-mentioned aliphatic dicarboxylic acids and polycondensing them. Optionally, the aliphatic polyester can be reacted with, for example, an isocyanate compound to jump up the molecular weight to obtain a polymer that can provide a desired polymer (macromolecule).

The aliphatic polyester obtained by ring opening polymerization of cyclic lactones include those obtained by selecting at least one member of cyclic monomers such as $\epsilon$-caprolactone, $\delta$-valerolactone, and $\beta$-methyl-$\delta$-valerolactone, and polymerizing the selected monomer(s).

The synthetic aliphatic polyesters include, for example, copolymers of cyclic acid anhydrides and oxiranes, more specifically, copolymers of succinic acid anhydride with ethylene oxide, propylene oxide or the like.

The aliphatic polyesters that are biosynthesized in bacterial cells include aliphatic polyesters that are biosynthesizedby acetyl coenzyme A (acetyl CoA) in bacterial cells including *Alcaligenes eutrophus.* The aliphatic polyesters are composedmainly of poly-β-hydroxybutyric acid (poly3HB). To improve practically important properties, it is industrially advantageous to copolymerize a valeric acid unit (HV) therewith to form a copolymer in the form of poly (3HB-CO-3HV). Generally, an HV copolymerization ratio is 0 to 40%. Further, a long chain hydroxyalkanoate may be copolymerized.

A conventional approach to improve the impact resistance of the lactic acid based resin involves blending the lactic acid based resin with an aliphatic polyester other than the lactic acid based resin. The aliphatic polyesters other than the lactic acidbased resin that can be used include aliphatic polyesters obtained by polycondensing aliphatic dicarboxylic acids or derivatives thereof with aliphatic polyhydric alcohols. Typical examples of such aliphatic polyester include Bionole series manufactured by Showa Highpolymer Co., Ltd.

However, the aliphatic polyesters such as Bionole series have a heat of crystal melting (ΔHm) of more than 30 J/g and it is necessary to blend a large amount of aliphatic polyester to have improved impact resistance exhibited. When a large amount of the aliphatic polyester other than the lactic acid based resin is blended, the resultant molded articles become flexible or have reduced heat resistance, which causes a problem that practically acceptable injection molded articles cannot be obtained.

Surprisingly, in the present invention, since the component (B) that has a ΔHm of 5 J/g to 30 J/g is used, blending the component (B) in amounts of 5 mass% to 25 mass% allows to give an effect of improving impact resistance that is equivalent to or higher than the case where the aliphatic polyester such as one of the Bionole series is used in an amount of more than 25 mass%. Therefore, by using the component (B) as in the present invention, injection molded articles that have acceptable impact resistance and heat resistance simultaneously can be provided.

The resin composition of the present invention also contains (C) an aliphatic polyester other than the lactic acid based resin, having a glass transition temperature (Tg) of 0°C or less and a heat of crystal melting (ΔHm) of 50 J/g to 70 J/g. It is preferable that the resin composition contain the component (A) and the component (B) in amounts of 90 mass% to 70 mass% and the component (C) in an amount of 10 mass% to 30 mass%, and the sum of the components (A), (B), and (C) be 100 mass %. Since the component (C) is contained, the formed molded articles have improved elastic moduli. This prevents deformation of the molded articles when they are taken out from the mold or minimizes deformation of the molded articles when the molded articles are crystallized after molding.

For the aromatic aliphatic polyester in the component (C) and the aliphatic polyester other than the lactic acid based resin, similar polyesters as those exemplified above and having a heat of crystal melting (ΔHm) of 50 J/g to 70 J/g are used. Examples of such aliphatic polyester include "Bionole 1001" and "Bionole 1003" (trade names) manufactured by Showa Highpolymer Co., Ltd.

The resin composition of the present invention can further contain (D) an inorganic filler having a mean particle size of 1 μm to 5 μm. The resin composition that contains the inorganic filler having a mean particle size of 1 μm to 5 μm can have a minimized reduction in impact resistance of the resultant molded article. Moreover, dispersibility in the resin composition increases.

The content of the inorganic filler is within a range of 5 mass% to 20 mass% of the resin composition. Blending the inorganic filler in this manner can prevent deformation of molded articles when the injection molded articles are taken out from the mold and can also prevent the molded articles from being shrunk or curled when the molded articles are heated. If the blending amount of the inorganic filler is more than 20 mass%, the molded articles may have a reduced strength.

Specific examples of the inorganic filler that can be used in the present invention include talc, kaolin, calcium carbide, bentonite, mica, sericite, glass flakes, graphite, magnesium hydroxide, aluminum hydroxide, antimony trioxide, barium sulfate, zincborate, hydrous calcium borate, alumina, magnesia, wollastonite, xonotolite, sepiolite, whisker, glass fiber, metal powder, bead, silica balloon, volcano sand balloon, layered silicates, silicate compounds such as calcium silicate, magnesium silicate, and aluminum silicate, or minerals composed mainly of silicate compounds. The term "minerals composed mainly of silicate compounds" as used herein means that the minerals contain the silicate compounds in amounts of 50 mass% to 100 mass %, preferably 70 mass% to 100 mass%. Examples of the mineral that is composed mainly of the silicate compounds include wollastonite that is composed mainly of calcium silicate, talc that is composed mainly of magnesium silicate, and mica that is composed mainly of aluminum silicate. The silicate compounds or minerals that are composed mainly of silicate compounds have a refractive index of preferably about 1.5 to about 1.8. For example, wollastonite has a refractive index of 1.63, talc has a refractive index of 1.56, and mica has a refractive index of 1.56. Moreover, when the silicate compounds or minerals that are composed mainly of silicate compounds are blended, these are blended in amounts within the range of preferably 1 mass% to 30 mass%. The surface of the inorganic filler may be preliminarily treated with titanic acid, fatty acids, silane coupling agent or the like. The surface treatment of the inorganic filler can make its adhesion with the resin better to increase the effect of the inorganic filler.

In the present invention, it is preferable to blend preferably 0.5 mass part to 10 mass parts, more preferably 0.5 mass part to 3 mass parts, of a carbodiimide compound based on a total of 100 mass parts of the components (A), (B), and (C). Blending the carbodiimide compound in amounts of 0.5 mass part to 10 mass parts can impart the resultant injection molded articles with resistance to hydrolysis. If the blending amount of the carbodiimide compound is more than 10 mass parts, bleeding out of the carbodiimide compound may take place, resulting in an unacceptable appearance of the molded article or a reduction in mechanical properties of the molded article due to plasticization. Also, biodegradability or compost degradability may be deteriorated.

The carbodiimide compounds that can be used in the present invention include those having a basic structure represented by the following general formula (1):

$$- (N=C=N-R-)_n - \quad (1)$$

wherein n is an integer of 1 or more, and R is an organic connecting unit. R can be any one of an aliphatic group, an alicyclic group, or an aromatic group. n is usually an integer selected from between 1 and 50. When n is an integer of 2 or more, the two or more (R) s may be the same or different.

More particularly, examples of the carbodiimide compound include bis(dipropylphenyl)carbodiimide, bis(dipropylphenyl)carbodiimide, poly(4,4'-diphenylmethanecarbodiimide), poly(p-phenylenecarbodiimide), poly(m-phenylenecarbodiimide), poly(tolylcarbodiimide), poly(diisopropylphenylenecarbodiimide), poly(methyl-diisopropylphenylenecarbodiimide), poly (tolylisopropylphenylene carbodiimide) and so like, and monomers of these. These carbodiimide compounds may be used singly or two or more of them may be used in combination. In the present invention, it is preferable to use bis (dipropylphenyl) carbodiimide.

The resin composition of the present invention can further contain (F) an ester compound having a molecular weight within the range of 200 to 2 , 000 . The molecular weight of the ester compound is preferably 250 to 1,000. If the molecular weight of the ester compound is less than 200, the effect of improving the impact resistance of the resulting resin cannot be obtained and there is a fear that the ester compound bleeds out on the surface of the molded article. On the other hand, if the molecular weight of the ester compound is more than 2,000, the effect of improving the impact resistance of the molded article cannot be obtained or may in some cases decrease. If present, the ester compound is blended in amounts of 0.5 mass part to 5 mass parts based on 100 mass parts of a total of the components (A), (B), and (C). Blending the ester compound in amounts of 0.5 mass part to 5 mass parts enables further improvement of the impact resistance of the injection molded article. If the blending amount of the ester compound is more than 5 mass parts, the resin composition for forming molded article may become plasticized and the heat resistance of the molded article may decrease.

Specific examples of the ester compound include diisodecyl adipate, di(2-ethylhexyl) azelate, di(2-ethylhexyl) sebacate, di(2-ethylhexyl) dodecanedioate, acetyltributyl citrate, dibutyl sebacate, di(2-ethylhexyl)adipate, diisononyl adipate, dimethyl adipate, dibutyl adipate, tributyl citrate, acetyltributyl citrate, triethyl citrate, diisobutyl adipate, di(2-ethylheyxl) dodecanedionate, dibutyl phthalate, diisononyl phthalate, 2-ethylhexylbenzyl phthalate, dimethyl phthalate, diheptyl phthalate, diisodecyl phthalate, di (2-ethylhexyl) phthalate, tris (2-ethylhexyl) trimellitate, tributyl trimellitate, tri (2-ethylhexyl) trimellitate, glycerol triacetate, polyethylene glycol and so like.

The resin composition of the present invention can further contain (G) a hiding agent having a refractive index of 2.0 or more. If present, the blending amount of the hiding power improver is 0.1 mass part to 5 mass parts, preferably 0.5 mass part to 2 mass parts, based on 100 mass parts of a sum of the components (A), (B), and (C). The hiding power improver blended in this manner can improve the appearance of weld line, which is a major cause of unacceptable appearance of the formed molded article, and provide the effect of improving the color fastness. If the blending amount of the hiding power improver is more than 5 mass parts, the hiding power may be excessive to cause the problem of staining property. Therefore, if present, the blending amount of the hiding power improver is 5 mass parts or less.

In the present invention, the refractive index of the hiding power improver is preferably 2.3 or more, more preferably 2.7 or more. If present, the hiding power improver having a refractive index of 2.0 or more is selected from titanium oxide, lead titanate, potassium titanate, zirconium oxide, zinc sulfide, antimony oxide, and zinc oxide. To improve the hiding power efficiently, it is particularly preferable to blend titanium oxide having the highest refractive index (refractive index: 2.76). When the carbodiimide compound is added, the lactic acid based resin tends to yellow since the carbodiimide compound contains nitrogen. However, blending particles having a refractive index of 2.7 or more (for example, titanium dioxide) can provide the effect of preventing yellowing.

Moreover, various additives such as heat stabilizers, antioxidants, UV absorbents, light stabilizers, pigments, colorants, lubricants, nucleating agents, and plasticizers can be added so far as they do not harm the effects of the present invention. Examples of the colorant that can be used include anthanthrone, anthraquinone, anthrapyrimidine, isoindolinone, indanthrone, carbon black, quinacridone, quinophthalone, titanium oxide, iron oxide, thioindigo, zinc diiron oxide, dioxazine, diketopyrrolopyrrole, naphthol, $\beta$-naphthol, titanium dioxide, pyrazolone, phthalocyanine, benzoimidazolone, perylene and so like.

An exemplary method of molding the injection molded article of the present invention is explained in the following.

Respective materials of the lactic acid based resin (A), the aromatic aliphaticpolyester and so on, the component (B), the aromatic aliphatic polyester and so on, the component (C), and optionally the inorganic filler (D), the carbodiimide compound (E), the ester compound (F), the hiding power improver (G), and other additives are charged in the same injection molding machine and directly mixed and injection molded to obtain injection molded articles. Alternatively, dry-blended materials are extruded into strands using a biaxial extruder to obtain pellets. Thereafter, the pellets can be returned to the injection molded machine to form injection molded articles.

Although a reduction in molecular weight due to degradation of the material must be taken into consideration regardless of which ever method is followed, it is preferable to select the latter method to mix each material uniformly.

More particularly, for example, the respective materials of the lactic acid based resin (A), the aromatic aliphatic polyester and so on, the components (B) and (C), and optionally the inorganic filler (D), the carbodiimide compound (E), the ester compound (F), the hiding power improver (G), and other additives are sufficiently dried to remove the moisture. Then, the materials are molten and mixed using a biaxial extruder and extruded into strands to formpellets. Preferably, taking into consideration that the lactic acid based resin has different melting point depending on the compositional ratio of the L-lactic acid structure and the D-lactic acid structure and the melting point of the mixed resin varies depending on the mixed ratio of the aromatic aliphatic polyester, melt extrusion temperature is selected appropriately. Usually, the melt extrusion temperature is selected within the range of 100°C to 250°C.

After the formed pellets are sufficiently dried to remove the moisture, an injection molding method generally used for molding thermoplastic resins is used to perform injection molding of the dried pellets.

More particularly, the injection molded articles can be obtained by injection molding methods such as an injection molding method, a gas assisted molding method, and an injection compression molding method. Moreover, depending on the purpose, other injection molding methods than the above mentionedmethod are applicable, for example an in-mold forming method, a gas press molding method, a two color molding method, a sandwich molding method, PUSH-PULL, and SCORIM can be applied. However, the injection molding methods are not limited to those described above.

An injection molding apparatus used may include a generally used injection molding machine, a gas assisted molding machine, an injection press molding machine and molds used for these molding machines, and attached equipment, a mold temperature controlling apparatus, and a material drying apparatus.

The molding conditions can be as follows. To prevent the heat degradation of the resin in the injection cylinder, it is preferable to mold the resin at a molten resin temperature of 170°C to 210°C.

When the injection molded articles are obtained in an amorphous state, the mold temperature is as low as possible to shorten the cooling time of the molding cycle (mold clamping - injection - maintaining pressure - cooling - mold opening - removal). Generally, it is preferable that the mold temperature be 15°C to 55°C. It is also desirable to use a chiller. However, to prevent contraction, curing, and deformation of the molded article at the time of post-crystallization, it is preferable to set the temperature at a high-temperature side within the range of 15°C to 55°C. For example, it is preferable that the mold temperature be 40°C to 55°C.

In the case of the molded article to which the inorganic filler is added, if the amount of the inorganic filler is large, flow marks tend to be generated on the surface of the molded article. Accordingly, the injection speed is set lower than the case where no inorganic filler is added. To show specific example, for example, when a resin composition to which 13 mass% of talc has been added is injection molded using an injection molding machine with a screw diameter of 25 mm having a 2mm-thick plate mold, molded articles with no flow marks can be obtained when the injection speed is 30 mm/sec or less. On the other hand, when no inorganic filler is added, flow marks do not occur when the injection speed is as high as 50 mm/sec.

When a surface sink tends to occur, it is preferable to set holding pressure and a holding time to sufficient values. For example, it is preferable that the holding pressure be set within the range of 30 MPa to 100 MPa. It is preferable that the holding time be set appropriately within the range of 1 second to 15 seconds depending on the shape and thickness of the molded articles. For example, when molding is performed using the above-mentioned injection molding machine having a 2 mm-thick plate mold, the holding time is around 3 seconds.

In the present invention, it is preferable that the molded articles obtainedby injection molding be heat treated to crystallize the molded articles. The crystallization of the molded article results in further improvement of the heat resistance of the molded article. If performed, the temperature of the heat treatment is within the range of 60°C to 130°C, more preferably 70°C to 90°C. If the temperature of the heat treatment is less than 60°C, the crystallization of the molded article does not proceed. If the temperature of the heat treatment is more than 130°C, the molded article may be deformed or shrunk when the formed molded article is cooled.

The time of the heat treatment is set appropriately depending on the composition of the material, the heat treatment apparatus, and the temperature of the heat treatment. For example, when the temperature of the heat treatment is 70°C, it is preferable to perform the heat treatment for 15 minutes to 3 hours. When the temperature of the heat treatment is 130°C, it is preferable to perform the heat treatment for 10 seconds to 30 minutes. Examples of the method of crystallizing the molded article include a method that involves increasing the temperature of the mold after the injection molding to crystallize the molded article in the mold, a method that involves removing the injection molded article from the mold in an amorphous state and crystallizing the molded article using hot air, steam, hot water, an infrared ray heater, or an IH heater. Upon the heat treatment, the injection molded article need not be fixed. However, to prevent the deformation of the molded article it is preferable to fix the molded article using a mold, a plastic mold or the like. When productivity is taken into consideration, it is preferable to perform the heat treatment of the molded article in a packaged state.

To crystallize the molded article in a mold, a molten resin is filled in a heated mold and held in the mold for a predetermined time. The temperature of the mold is 60°C to 130°C, more preferably 70°C to 90°C. If the temperature of the mold is less than 60°C, the crystallization takes a long time, so that the cycle becomes too long. On the other hand, if the temperature of the mold is more than 130°C, the molded article may be deformed when the molded article is released.

In the present invention, the injection molded article preferably has an Izod impact strength (with notch, 23°C) according to Japan Industrial Standard (JIS) JISK-7110 of 15 kJ/m$^2$ or more, and a deflection temperature under load (method A, edge-wise) according to JISK-7191 of 50°C or more, and more preferably 55°C or more.

The injection molded article of the present invention has excellent heat resistance, excellent impact strength and excellent resistance to hydrolysis and can be used as molded articles for use in home electric appliance parts, automobile parts and other general molded articles. For example, according to the present invention, a desktop electronic calculator type molded article can be formed. Fig. 1A is a plan view showing a desktop electronic calculator type molded article according to one embodiment of the present invention and Fig. 1B is a front view of the desktop electronic calculator type molded article. Reference numerals 1 to 6 are openingportions of through holes. 1 is a windowportion that displays results of calculation. 2 and 3 are key portions for number symbols. 4, 5, and 6 are portions for engaging nails therewith.

EXAMPLES

Hereinafter, the present invention will be described in detail by examples. The measured values shown in the examples were obtained by performing measurements under the following conditions and calculated. The evaluations in each example were performed based on the following evaluation methods.

(1) Impact Resistance

A notched No. 2A sample (64 mm in length $\times$ 12.7 mm in width x 4 mm in thickness) was prepared according to JISK-7110 and was measured for Izod impact strength at 23°C using an impact tester ("Universal Impact Tester No. 258" manufactured by Yasuda Seiki Co. , Ltd. A practical standard for the Izod impact strength was defined to be 15 kJ/m$^2$.

(2) Heat resistance

A sample (120 mm in length $\times$ 11 mm in width $\times$ 3 mm in thickness) was prepared according to JISK-7191 and measured for deflection temperature under load using a deflection temperature under load tester ("S-3M" manufactured by Toyo Seiki Co., Ltd.). The measurements were performed under the conditions of edge-wise and under bending stress of 1.80 MPa. A practical standard for the deflection temperature under load was defined to be 50°C or more.

(3) Dimension stability

A desktop electronic calculator type mold was provided and by using an injection molding machine "IS50E" manufactured by Toshiba Machine Co., Ltd. a desktop electronic calculator type amorphous molded article having the shape as shown in Fig. 1 was obtained (X=about 7.6 cm, Y=12.2 cm). The molding conditions in this case were: a cylinder temperature of 195°C, a mold temperature of 25°C, an injection pressure of 110 MPa, an injection time of 1.5 seconds, a holding pressure of 80 MPa, a holding time of 3.0 seconds, a back pressure of 10 MPa, and a screw rotation number of 110 rpm.

After the molding, the molded article was left to stand for 24 hours in the measuring chamber (temperature: 23°C, humidity: 50% RH), and the sizes of X and Y shown in Fig. 1 were measured. Thereafter, heat treatment of the molded article was performed at 70°C for 3.5 hours. The heat treatment was performed in an oven with constant temperature and humidity by leaving the molded article to stand without loads. After the heat treatment, the molded article was immediately taken out and was left to stand for 24 hours in the measuring chamber. Then, the sizes of X and Y were measured again, and contraction ratio due to the heat treatment was calculated. The measurements of the size of X and Y were performed by using a tridimensional measuring machine. The evaluation was performed based on the following evaluation standard.

Evaluation standard:

"O" Both the contraction ratios of X and Y were less than 1.0% and no curls occurred.

"Δ" Either one of the contraction ratios of X and Y was 1.0 or more and less than 2.0. Some curls occurred, which were within practically usable range depending on the utility.

"×" Both the contraction ratios of X and Y were 2.0 or more and considerable curls occurred.

(4) Weight average molecular weight of aliphatic polyester resin

Using gel permeation chromatography, measurements were performed under the conditions of chloroform as a solvent, a concentration of the solution of 0.2 wt/vol%, an injection amount of the solution of 200 μl, a flow rate of the solvent of 1.0 ml/minute, and a temperature of the solvent of 40°C. The weight average molecular weight of the lactic acid based resin was calculated in terms of polystyrene. The weight average molecular weights of the standard polystyrenes were 2,000,000, 430,000, 110,000, 35,000, 10,000, 4,000, and 600.

(5) Resistance to hydrolysis

Wet heat tests were performed under the conditions of 85°C and 80% RH, and a molecular weight holding ratio after 100 hours was calculated by the following equation. The practical standard for the molecular weight holding ratio was defined to be 70% or more.

$$\text{Molecular weight holding ratio (\%)} = \{(\text{Weight average molecular weight after wet heat test}) / (\text{Weight average molecular weight before wet heat test})\} \times 100$$

(6) Heat of crystal melting (ΔHm)

The molded article was scraped into scales of about 5 mmφ and about 10 mg. Using a differential scanning calorimeter ("DSC-7" manufactured by Perkin-Elmer), temperature increasing measurements were performed according to JIS-K7121 to prepare a thermogram. The heat of crystal melting (ΔHm) was read from the thermogram.

(7) Color fastness

The molded article was subjected to exposure tests using "Sunshine Weatherometer S80" manufactured by Suga Test Instruments Co., Ltd. at a black panel temperature of 63°C. The degrees of discoloration when exposed for 50 hours, 100 hours, 200 hours, and 500 hours were evaluated based on the following evaluation standards. In the evaluation of exposure for 200 hours, those evaluated as no discoloration were evaluated to be acceptable.

Evaluation standard:

"O" No discoloration
"Δ" Slight discoloration
"×" Discoloration

(8) Coloring

Colorants were added to the resin compositions dry-blended in the examples and the comparative examples with adjusting the amounts in such a manner that the obtained colors resembled as much as possible color samples (a: PANTONE 802C (light green), b: PANTONE 803C (yellow), and c: PANTONE 804C (orange)). Using a 40 mmφ small same direction biaxial extruder manufactured by Mitsubishi Heavy Industry Co.,Ltd., the resin compositions were compounded at an extrusion temperature of 190°C and pelletized. The obtained pellets were injection molded using an injection molding machine "IS50E" manufactured by Toshiba Machine Co. , Ltd. (diameter of screw: 25 mm) to form a plate of L 100 mm × W 100 mm × t 3 mm (hereinafter, referred to as "3 mm plate"). Main molding conditions were as follows.

1) Temperature conditions: a cylinder temperature (195°C), a mold temperature (25°C)

2) Injection conditions: injection pressure (110 MPa), an injection time (1.5 seconds), a holding pressure (80 MPa), and a holding time (3.0 seconds).
3) Metering conditions: Screw rotation number (110 rpm), and a back pressure (10 MPa).

The obtained plate type injection molded article was compared with the colors of the color samples and evaluation was made based on the following evaluation standards. In the comparative evaluation of the color with the color samples a, b, and c those with evaluations "O" for two items or more were evaluated acceptable.

Evaluation Standard

"O" The color coincided between the injection molded article and the color sample.
"Δ" The color substantially coincided between the injection molded articles and the color sample.
"×" The color did not coincide between the injection molded article and the color sample.

EXAMPLES I

(Example I-1) (Reference)

"Nature Works 4032D" manufactured by Cargill Dow (L-lactic acid/D-lactic acid=98.5/1.5, weight average molecular weight of 200, 000) was used as a lactic acid based resin and "Eastar Bio" manufactured by Eastman Chemicals (22 mol% of terephthalic acid, 28 mol% of adipic acid, 50 mol% of 1, 4-butanediol, ΔHm=21. 6 J/g) was used as an aromatic aliphatic polyester. "Nature Works 4032D" and "Eastar Bio" were dry-blended in a mass ration of 90:10, compounded using a 40 mmϕ small same direction biaxial extruder manufactured by Mitsubishi Heavy Industry Co. , Ltd., "Nature Works 4032D" and "Eastar Bio" were compounded at an extrusion temperature of 180°C andpelletized. The obtainedpellets were injection molded using an injection molding machine "IS50E" manufactured by Toshiba Machine Co., Ltd. (diameter of screw: 25 mm) to form two types of plate having different thickness, namely, a plate of L 100 mm × W 100 mm × t 3 mm or t 4 mm (hereinafter, referred to as "3-mm plate" or "4-mm plate") . Main molding conditions were as follows.

1) Temperature conditions: a cylinder temperature (195°C), a mold temperature (20°C).
2) Injection conditions: injection pressure (115 MPa), a holding pressure (55 MPa).
3) Metering conditions: Screw rotation number (65 rpm), and a back pressure (15 MPa).

Then, the obtained injection molded article was left to stand in a baking tester ("DKS-5S" manufactured by Daiei Kagaku Seiki Seisakusho Co., Ltd. and subjected to heat treatment at 70°C for 3.5 hours. Evaluation of Izod impact strength was made using the 4-mm plate and evaluation of deflection temperature under load was made using the 3-mm plate. Table 1 shows the results obtained.

(Example I-2) (Reference)

An injection molded article was prepared in the same manner as that in Example I-1 except that "Nature Works 4032D" and "Eastar Bio" were dry-blended in a mass ratio of 85:15. The obtained injection molded article was evaluated similarly to Example I-1. Table 1 shows the results obtained.

(Example I-3) (Reference)

An injection molded article was prepared in the same manner as that in Example I-1 except that "Nature Works 4032D" and "Eastar Bio" were dry-blended in a mass ratio of 80:20. The obtained injection molded article was evaluated similarly to Example I-1. Table 1 shows the results obtained.

(Example I-4) (Reference)

"Ecoflex F" manufactured by BASF (24 mol% of terephthalic acid, 26 mol% of adipic acid, 50 mol% of 1,4-butanediol, ΔHm=21.0 J/g) was used as an aromatic aliphatic polyester having a glass transition temperature (Tg) of 0°C or less and a ΔHm of 30 J/g or less. An injection molded article was prepared in the same manner as that in Example I-1 except that instead of "Nature Works 4032D" and "Eastar Bio", "Nature Works 4032D" and "Ecoflex F" were dry-blended in a mass ratio of 85:15. The obtained injection molded article was evaluated similarly to Example I-1. Table 1 shows the results obtained.

(Example I-5)

Polybutylene succinate ("Bionole 1001" manufactured by Showa Highpolymer Co., Ltd., ΔHm=58.0 J/g) was used as an aliphatic polyester having a Tg of 0°C or less and a ΔHm of 50 J/g or more. An injection molded article was prepared in the same manner as that in Example I-1 except that instead of "Nature Works 4032D" and "Eas tar Bio" , "Nature Works 4032D", "Ecoflex F", and "Bionole 1001" were dry-blended in a mass ratio of 65:15:20. The obtained injection molded article was evaluated similarly to Example I-1. Table 1 shows the results obtained.

(Example I-6) (Reference)

Preparation of resin A:

Polymerization of resin A was performed by the following method such that the composition was composed of 30 mol% of 1,4-butanediol, 20 mol% of 1,4-cyclohexanedimethanol, 40 mol% of succinic acid, and 10 mol% of adipic acid.
That is, 1,4-butanediol, 1,4-cyclohexanedimethanol, succinic acid, and adipic acid were reacted in a reactor in a nitrogen atmosphere at 200°C for 2 hours. Thereafter, the supply of nitrogen was stopped and esterification reaction was performed for 4 hours under reduced pressure of 10mmHg. Tetraisopropxytitaniumwas added to the reaction mixture as a catalyst and deglycolation reaction was performed at 220°C under reduced pressure of 5 mmHg for 7 hours. After condensed water was removed, hexamethylene diisocyanate was added to the reactedmixture and this mixture was subjected to coupling reaction at 200°C for 1 hour to prepare resin A. The obtained resin A had a weight average molecular weight of 200,000 and a heat of crystal melting (ΔHm) of 23.7 J/g.
The resin A was used as an aliphatic polyester other than the lactic acid based resin having a glass transition temperature (Tg) of 0°C or less and a ΔHm=5 J/g to 30 J/g) . An injection molded article was prepared in the same manner as that in Example I-1 except that instead of "Nature Works 4032D" and "Eastar Bio", "Nature Works 4032D" and the resin A were dry-blended in a mass ratio of 85:15. The obtained injection molded article was evaluated similarly to Example I-1. Table 1 shows the results obtained.

Table 1

| | | Ex. I-1* | Ex. I-2* | Ex. I-3* | Ex. I-4* | Ex. I-5 | Ex. I-6* |
|---|---|---|---|---|---|---|---|
| B l e n d | Nature Works 4032D | 90 | 85 | 80 | 85 | 65 | 85 |
| | Eastar Bio (ΔHm=21.6 J/g) | 10 | 15 | 20 | | | |
| | Ecoflex F (ΔHm=21.0 J/g) | | | | 15 | 15 | |
| | Bionole 1001 (ΔHm=58.0 J/g) | | | | | 20 | |
| | Resin A (ΔHm=23.7 J/g) | | | | | | 15 |
| Izod impact strength (kJ/m$^2$) | | 18 | 28 | 34 | 28 | 32 | 24 |
| Deflection temperature under load (°C) | | 59 | 57 | 56 | 57 | 55 | 58 |
| *) Reference | | | | | | | |

Table 1 demonstrated that the injection molded articles of Examples I-1 to I-6 had an Izod impact strength of 15 kJ/m$^2$ or more and a deflection temperature under load of 50°C or more. Moreover, the injection molded articles have excellent impact strength and excellent heat resistance.

(Example I-7) (Reference)

Talc ("SG-95", manufactured by Japan Talc Co., Ltd.) was used as an inorganic filler. An injection molded article was prepared in the same manner as that in Example I-1 except that "Nature Works 4032D", "Easter Bio" and "SG-95" instead of "Nature Works 4032D" and "Eastar Bio" were dry-blended in a mass ratio of 80:15:5. The obtained injection molded article was evaluated for Izod impact strength and deflection temperature under load similarly to Example I-1. Also, evaluation of dimension stability of the obtained molded article was performed. Table 2 shows the results obtained.

(Example **I-8**) (Reference)

An injection molded article was prepared in the same manner as that in Example I-7 except that "Nature Works 4032D", "Eastar Bio", and "SG-95" were dry-blended in a mass ratio of 75:15:10. The obtained injection molded article was evaluated similarly to Example I-7. Table 2 shows the results obtained.

(Example **I-9**) (Reference)

An injection molded article was prepared in the same manner as that in Example I-7 except that "Nature Works 4032D", "Eastar Bio", and "SG-95" were dry-blended in a mass ratio of 70:15:15. The obtained injection molded article was evaluated similarly to Example I-7. Table 2 shows the results obtained.

(Example I-10)

An injection molded article was prepared in the same manner as that in Example I-7 except that "Bionole 1001" was used as an aliphatic polyester other than the lactic acid based resin having a Tg of 0°C or less and a $\Delta$Hm of 50 J/g or more and that "Nature Works 4032D", "Eastar Bio", "SG-95", and "Bionole 1001 were dry-blended in a mass ratio of 55:15:10:20. The obtained injection molded article was evaluated similarly to Example I-7. Table 2 shows the results obtained.

Table 2

| | | Ex. I-7* | Ex. I-8* | Ex. I-9* | Ex. I-10 |
|---|---|---|---|---|---|
| B l e n d | Nature Works 4032D | 80 | 75 | 70 | 55 |
| | Eastar Bio ($\Delta$Hm=21.6 J/g) | 15 | 15 | 15 | 15 |
| | SG-95 | 5 | 10 | 15 | 10 |
| | Bionole 1001 ($\Delta$Hm=58.0 J/g) | | | | 20 |
| Izod impact strength (kJ/m$^2$) | | 24 | 21 | 17 | 25 |
| Deflection temperature under load (°C) | | 57 | 57 | 58 | 57 |
| Dimension stability | | $\Delta$ | $\bigcirc$ | $\bigcirc$ | $\bigcirc$ |
| *) Reference | | | | | |

Table 2 demonstrated that the injection molded articles of Examples I-7 to I-10 had an Izod impact strength of 15 kJ/m$^2$ or more and a deflection temperature under load of 50°C or more. Moreover, the injection molded articles have excellent impact strength and excellent heat resistance. Further, the evaluation of dimension stability of the desktop electronic calculator type articles showed good results.

(Comparative Example I-1)

Pellets were prepared in the same manner as in Example I-1 except that no aromatic aliphatic polyester was blended and that 100 mass parts of "Nature Works 4032D was used. An injection molded article was prepared in the same manner as that in Example I-1 using the pellets. The obtained injection molded article was evaluated similarly to Example I-1. Table 3 shows the results.

(Comparative Example I-2)

An injection molded article was prepared in the same manner as that in Example I-1 except that polybutylene succinate ("Bionole 1001" manufactured by Showa Highpolymer Co. , Ltd., $\Delta$Hm=58.0 J/g) was used as an aliphatic polyester instead of the aromatic aliphatic polyester having a Tg of 0°C or less and a $\Delta$Hm of 30 J/g or less, and that "Nature Works 4032D" and "Bionole 1001" were dry-blended in a mass ratio of 75:25. The obtained injection molded article was evaluated similarly to Example I-1. Table 3 shows the results obtained.

(Comparative Example I-3)

An injection molded article was prepared in the same manner as that in Example I-1 except that a polybutylene succinate (80 mol%) / adipate (20 mol%) copolymer ("Bionole 3003" manufactured by Showa Highpolymer Co., Ltd. , ΔHm=43. 0 J/g) was used as an aliphatic polyester instead of the aromatic aliphatic polyester, and that "Nature Works 4032D" and "Bionole 3003" were dry-blended in a mass ratio of 85 :15 . The obtained injection molded article was evaluated similarly to Example I-1. Table 3 shows the results obtained.

(Comparative Example I-4)

An injection molded article was prepared in the same manner as that in Example I-1 except that a polybutylene succinate (80 mol%)/adipate (20 mol%) copolymer ("Bionole 3003" manufactured by Showa Highpolymer Co. , Ltd. , ΔHm=43.0 J/g) was used as an aliphatic polyester instead of the aromatic aliphatic polyester, and that "Nature Works 4032D" and "Bionole 3003" were dry-blended in a mass ratio of 70:30. The obtained injection molded article was evaluated similarly to Example I-1. Table 3 shows the results obtained.

Table 3

| | | Comp. Ex. I-1 | Comp. Ex. I-2 | Comp. Ex. I-3 | Comp. Ex. I-4 |
|---|---|---|---|---|---|
| Blend | Nature Works 4032D | 100 | 75 | 85 | 70 |
| | Bionole 1001 (ΔHm=58.0 J/g) | | 25 | | |
| | Bionole 3003 (ΔHm=43.0 J/g) | | | 15 | 30 |
| Izod impact strength (kJ/m$^2$) | | 4 | 8 | 10 | 17 |
| Deflection temperature under load (°C) | | 67 | 54 | 48 | 44 |

Table 3 demonstrated that the injection molded articles of Comparative examples I-1 to I-3 have an Izod impact strength less than 15 kJ/m$^2$ and are poor in impact strength. Moreover, the injection molded articles of Comparative Examples I-3 to I-4 had a deflection temperature under load of less than 50°C, and were poor in heat resistance.

(Examples I-11 and I-12) (Reference)

An injection molded article was prepared in the same manner as that in Example I-1 except that "Stabaksol P" (aromatic polycarbodiimide:silica=95:5) manufactured by Rhein Chemie was further used as a carbodiimide compound and that instead of "Nature Works 4032D" and "Eastar Bio", "Nature Works 4032D" , "Eastar Bio", and "Stabaksol P" were dry-blended in a mass ratio of 85:15:1.5 or 85:15:3.0. The molecular weight holding ratio of each of the obtained injection molded article was evaluated as evaluation of resistance to hydrolysis. Table 4 shows the results obtained.

(Example I-13) (Reference)

An injection molded article was prepared in the same manner as that in Example I-1 except that bis(dipropylphenyl)carbodiimide ("Stabaksol I" manufactured by Rhein Chemie) was further used as a carbodiimide compound and that instead of "Nature Works 4032D" and "Eastar Bio", "Nature Works 4032D" , "Eastar Bio", and "Stabaksol I" were dry-blended in a mass ratio of 85:15:1.5. The molecular weight holding ratio of each of the obtained injection molded article was evaluated as evaluation of resistance to hydrolysis. Table 4 shows the results obtained.

Table 4

| | | Example I-11* | Example I-12* | Example I-13* |
|---|---|---|---|---|
| Blend | Nature Works 4032D | 85 | 85 | 85 |
| | Eastar Bio (ΔHm=21.6 J/g) | 15 | 15 | 15 |
| | Stabaksol P | 1.5 | 3.0 | |
| | Stabaksol I | | | 1.5 |

(continued)

|  | Example I-11* | Example I-12* | Example I-13* |
|---|---|---|---|
| Molecular weight holding ratio (%) | 93 | 98 | 94 |
| *) Reference | | | |

Table 4 indicated that the injection molded articles of Examples I-11 to I-13 exhibited a molecular weight holding ratio of 70% or more and thus showed good results in the evaluation of the resistance to hydrolysis.

(Example 1-14)

An injection molded article was prepared in the same manner as that in Example I-1 except that "Nature Works 4032D" , "Ecoflex F", "Bionole 1001", "SG-95", and "Stabaksol P" instead of "Nature Works 4032D" and "Eastar Bio" were dry-blended in a mass ratio of 55:10:25:10:1.5. The obtained injection molded article was evaluated for impact strength and heat resistance similarly to Example I-1. Also, evaluation of dimension stability of the obtained molded article was performed. Further, the molecular weight holding ratio was obtained as evaluation of resistance to hydrolysis. Table 5 shows the results obtained.

Table 5

|  |  | Example I-14 |
|---|---|---|
| Blend | Nature Works 4032D | 55 |
|  | Ecoflex F ($\Delta$Hm=21.0 J/g) | 10 |
|  | Bionole 1001 ($\Delta$Hm=58.0 J/g) | 25 |
|  | SG-95 | 10 |
|  | Stabaksol P | 1.5 |
| Izod impact strength (kJ/m$^2$) | | 30 |
| Deflection temperature under load (°C) | | 57 |
| Dimension stability | | ○ |
| Molecular weight holding ratio (%) | | 93 |

Table 5 demonstrated that the injection molded article of Example I-14 had an Izod impact strength of 15 kJ/m$^2$ or more and a deflection temperature under load of 50°C or more. This indicates that the injection molded article of Example I-14 had excellent impact strength and excellent heat resistance. Further, the injection molded article of Example I-14 had excellent dimension stability. Moreover, the molecular holding ratio of the injection molded article of Example I-14 had was calculated to be 90% or more, showing good results in the evaluation of the resistance to hydrolysis.

(Example I-15) (Reference)

An injection molded article was prepared in the same manner as that in Example I-11 except that "Nature Works 4031D" was used instead of "Nature Works 4032D" and "Micro Ace L1" was further used, and that "Nature Works 4031D", "Eastar Bio", "Micro Ace L1", and "Stabaksol P" were dry-blended in a mass ratio of 70:15:15:1.5. The obtained injection molded article was evaluated for impact strength and heat resistance similarly to Example I-1. Further, the molecular weight holding ratio was obtained as evaluation of resistance to hydrolysis similarly to Example I-11. Table 6 shows the results obtained.

(Example I-16) (Reference)

An injection molded article was prepared in the same manner as that in Example I-15 except that "Nature Works 4031D", "Eastar Bio", "Micro Ace L1", and "Stabaksol P" were dry-blended in a mass ratio of 70:15:15:3.0. The obtained injection molded article was evaluated for impact strength and heat resistance similarly to Example I-1. Further, the molecular weight holding ratio was obtained as evaluation of resistance to hydrolysis similarly to Example I-11. Table 6 shows the results obtained.

(Example I-17) (Reference)

An injection molded article was prepared in the same manner as that in Example I-15 except that "Stabaksol I" was used instead of "Stabaksol P", and that "Nature Works 4031D", "Eastar Bio", "Micro Ace L1", and "Stabaksol I" were dry-blended in a mass ratio of 70:15:15:1.5. The obtained injection molded article was evaluated for impact strength and heat resistance similarly to Example I-1. Further, the molecular weight holding ratio was obtained as evaluation of resistance to hydrolysis similarly to Example I-11. Table 6 shows the results obtained.

Table 6

| | | Example I-15* | Example I-16* | Example I-17* |
|---|---|---|---|---|
| B l e n d | Nature Works 4031D | 70 | 70 | 70 |
| | Eastar Bio (ΔHm=21.6 J/g) | 15 | 15 | 15 |
| | Micro Ace L1 | 15 | 15 | 15 |
| | Stabaksol P | 1.5 | 3.0 | |
| | Stabaksol I | | | 1.5 |
| Izod impact strength (kJ/m$^2$) | | 25 | 25 | 25 |
| Deflection temperature under load (°C) | | 57 | 57 | 57 |
| Molecular weight holding ratio (%) | | 93 | 98 | 94 |
| *) Reference | | | | |

Table 6 demonstrated that the injection molded articles of Examples I-15 to I-17 had an Izod impact strength of 15 kJ/m$^2$ or more and a deflection temperature under load of 50°C or more. This indicates that the injection molded article of Examples I-15 to I-17 had excellent impact strength and excellent heat resistance. The evaluation of the dimension stability performed on the desktop electronic calculator type molded article showed good results.

Example II

(Example II-1)

"Nature Works 4031D" manufactured by Cargill Dow (L-lactic acid/D-lactic acid=98.5/1.5, weight average molecular weight of 200,000) was used as a lactic acid based resin and "Ecoflex F" manufactured by BASF (24 mol% of terephthalic acid, 26 mol% of adipic acid, and 50 mol% of 1,4-butanediol, ΔHm=21.0 J/g, Tg=-30°C) was used as an aromatic aliphatic polyester. "Bionole 1003" manufactured by Showa Highpolymer Co., Ltd. , (Tg is 0°C or less, ΔHm=58.0 J/g) was used as an aliphatic polyester. Talc having an average particle size of 2.5 μm ("SG-95", manufactured by Japan Talc Co., Ltd.) was used as an inorganic filler. AS shown in Table 7, "Nature Works 4031D", "Ecoflex", "Bionole 1003", and "SG-95" were dry-blended in a mass ratio of 50:15:25:10. Thereafter, these were compounded using a 40 mmφ small same direction biaxial extruder manufactured by Mitsubishi Heavy Industry Co., Ltd. at an extrusion temperature of 180°C and pelletized. The obtained pellets were injection molded using an injection molding machine "IS50E" manufactured by Toshiba Machine Co. , Ltd. (diameter of screw: 25 mm) to form two types of plate having different thickness, namely, a plate of L 200 mm × W 30 mm × t 3 mm or t 4 mm (hereinafter, referred to as "3-mm plate" or "4-mm plate"). Main molding conditions were as follows.

1) Temperature conditions: a cylinder temperature (195°C), a mold temperature (20°C).
2) Injection conditions: injection pressure (115 MPa), a holding pressure (55 MPa).
3) Metering conditions: Screw rotation number (65 rpm), and a back pressure (15 MPa).

Then, the obtained injection molded article was left to stand in a baking tester ("DKS-5S" manufactured by Daiei Kagaku Seiki Seisakusho Co., Ltd. and subjected to heat treatment at 70°C for 3.5 hours. Evaluation of Izod impact strength was made using the 4-mm plate and evaluation of deflection temperature under load was made using the 3-mm plate. Table 7 shows the results obtained.

(Example II-2)

An injection molded article was prepared in the same manner as that in Example II-1 except that "Nature Works 4031D", "Ecoflex", "Bionole 1003", and "SG-95" were dry-blended in a mass ratio of 55:10:25:10 as shown in Table 7. The obtained injection molded article was evaluated similarly to Example II-1. Table 7 shows the results obtained.

(Example II-3)

An injection molded article was prepared in the same manner as that in Example II-1 except that "Nature Works 4031D", "Ecoflex", "Bionole 1003", and "SG-95" were dry-blended in a mass ratio of 60:10:25:5 as shown in Table 7. The obtained injection molded article was evaluated similarly to Example II-1. Table 7 shows the results obtained.

(Example II-4)

An injection molded article was prepared in the same manner as that in Example II-1 except that "Nature Works 4031D", "Ecoflex", "Bionole 1003", and "SG-95" were dry-blended in a mass ratio of 55:15:15:15 as shown in Table 7. The obtained injection molded article was evaluated similarly to Example II-1. Table 7 shows the results obtained.

(Example II-5)

An injection molded article was prepared in the same manner as that in Example II-1 except that "Nature Works 4031D", "Ecoflex", "Bionole 1003", and "SG-95" were dry-blended in a mass ratio of 55:10:30:5 as shown in Table 7. The obtained injection molded article was evaluated similarly to Example II-1. Table 7 shows the results obtained.

(Example II-6)

An injection molded article was prepared in the same manner as that in Example II-1 except that instead of "SG-95" "Micro Ace L-1" was used as an inorganic filler, and that "Nature Works 4031D", "Ecoflex", "Bionole 1003", and "Micro Ace L-1" were dry-blended in a mass ratio of 50:10:25:10 as shown in Table 7. The obtained injection molded article was evaluated similarly to Example II-1. Table 7 shows the results obtained.

(Example II-7)

An injection molded article was prepared in the same manner as that in Example II-1 except that "Nature Works 4031D", "Ecoflex", "Bionole 1003", and "SG-95" were dry-blended in a mass ratio of 40:20:25 : 15 as shown in Table 7. The obtained injection molded article was evaluated similarly to Example II-1. Table 7 shows the results obtained.

(Example II-8)

An injection molded article was prepared in the same manner as that in Example II-1 except that "Nature Works 4031D", "Ecoflex", "Bionole 1003", and "SG-95" were dry-blended in a mass ratio of 70:5:20:5 as shown in Table 7. The obtained injection molded article was evaluated similarly to Example II-1. Table 7 shows the results obtained.

(Comparative Example II-1)

An injection molded article was prepared in the same manner as that in Example II-1 except that "Nature Works 4031D" and "Bionole 1003" were dry-blended in a mass ratio of 80:20 as shown in Table 7. The obtained injection molded article was evaluated similarly to Example II-1. Table 7 shows the results obtained.

(Example II-9)

An injection molded article was prepared in the same manner as that in Example II-1 except that polycarbodiimide ("Stabaksol P" manufactured by Rhein Chemie) was further used as a carbodiimide compound and that "Nature Works 4031D" , "Ecoflex", "Bionole 1003", "SG-95", and "Stabaksol P" were dry-blended in a mass ratio of 55:10:25:10:1.0 as shown in Table 8. The obtained injection molded article was evaluated for a deflection temperature under load in the same manner as in Example II-1. Also, the molecular weight holding ratio was evaluated as evaluation of resistance to hydrolysis. Table 8 shows the results obtained.

(Example II-10)

An injection molded article was prepared in the same manner as that in Example II-1 except that "Nature Works 4031D", "Ecoflex", "Bionole 1003", "SG-95", and "Stabaksol P" were dry-blended in a mass ratio of 55:10:25:10:2.0 as shown in Table 8. The obtained injection molded article was evaluated in the same manner as in Example II-9. Table 8 shows the results obtained.

(Example II-11)

An injection molded article was prepared in the same manner as that in Example II-1 except that "Nature Works 4031D", "Ecoflex", "Bionole 1003", "SG-95", and "Stabaksol P" were dry-blended in a mass ratio of 55:10:25:10:3.0 as shown in Table 8. The obtained injection molded article was evaluated in the same manner as in Example II-9. Table 8 shows the results obtained.

(Example II-12)

An injection molded article was prepared in the same manner as that in Example II-1 except that "Nature Works 4031D", "Ecoflex", "Bionole 1003", "SG-95", and "Stabaksol P" were dry-blended in a mass ratio of 55:10:25:10:4.5 as shown in Table 8. The obtained injection molded article was evaluated in the same manner as in Example II-9. Table 8 shows the results obtained.

(Example II-13)

An injection molded article was prepared in the same manner as that in Example II-1 except that "Nature Works 4031D", "Ecoflex", "Bionole 1003", "SG-95", and "Stabaksol P" were dry-blended in a mass ratio of 55:10:25:10:5.0 as shown in Table 8. The obtained injection molded article was evaluated in the same manner as in Example II-9. Table 8 shows the results obtained.

Table 7

| | | Example II | | | | | | | | Comparative Example II |
|---|---|---|---|---|---|---|---|---|---|---|
| | | 1 | 2 | 3 | 4 | 5 | 6 | 7 | 8 | 1 |
| B l e n d | Nature Works 4031D | 50 | 55 | 60 | 55 | 55 | 55 | 40 | 70 | 80 |
| | Ecoflex ($\Delta$ Hm=21.0J/g) | 15 | 10 | 10 | 15 | 10 | 10 | 20 | 5 | |
| | Bionole 1003 ($\Delta$Hm=58J/g) | 25 | 25 | 25 | 15 | 30 | 25 | 25 | 20 | 20 |
| | SG-95 | 10 | 10 | 5 | 15 | 5 | | 15 | 5 | |
| | Micro Ace L-1 | | | | | | 10 | | | |
| Izod impact strength (kJ/m$^2$) | | 47 | 30 | 25 | 49 | 54 | 26 | 58 | 19 | 10 |
| Deflection temperature under load (°C) | | 56 | 57 | 58 | 57 | 56 | 57 | 52 | 60 | 59 |
| Dimension stability | | ○ | ○ | ○ | ○ | ○ | ○ | ○ | ○ | × |

Table 8

| | | Example II - 9 | Example II - 10 | Example II - 11 | Example II - 12 | Example II - 13 |
|---|---|---|---|---|---|---|
| B l e n d | Nature Works 4031D | 55 | 55 | 55 | 55 | 55 |
| | Ecoflex (△ Hm=21. 6J/g) | 10 | 10 | 10 | 10 | 10 |
| | Bionole 1003 (△ Hm=58. 1) | 25 | 25 | 25 | 25 | 25 |
| | SG-95 | 10 | 10 | 10 | 10 | 10 |
| | Stabaksol P | 1.0 | 2.0 | 3.0 | 4.5 | 5.0 |
| Molecular weight holding ratio (%) | | 90 | 96 | 98 | 99 | 99 |
| Deflection temperature under load (°C) | | 57 | 57 | 57 | 55 | 53 |

Table 7 demonstrated that the injection molded articles of Examples II-1 to II-8 had an Izod impact strength of 20 kJ/m$^2$ or more and a deflection temperature under load of 55°C or more and also had excellent dimension stability.

Table 8 indicates that the injection molded articles of Examples II-10 to II-13 containing the carbodiimide compound in amounts of 1.5 mass parts to 4.5 mass parts based on a sum of 100 mass parts of "Nature Works 4031D", "Bionole 1003", "Ecoflex", and "SG-95" had high molecular weight holding rations. It is particularly preferable that the amount of the carbodiimide compound to be added is within the range of 2.0 mass parts to 3.0 mass parts based on the sum of 100 mass parts of "Nature Works 4031D" , "Bionole 1003" , "Ecoflex", and "SG-95".

On the other hand, the injection molded article of Comparative Example II-1 had a deflection temperature under load of 50°C or more and thus had heat resistance, however, proved to have poor impact strength and poor dimension stability.

Examples III

(Example III-1)

"Nature Works 4031D" manufactured by Cargill Dow (L-lactic acid/D-lactic acid=98.5/1.5, weight average molecular weight of 200, 000) was used as a lactic acid based resin and "Ecoflex" manufactured by BASF (24 mol% of terephthalic acid, 26 mol% of adipic acid, and 50 mol% of 1,4-butanediol, △Hm=21.0 J/g, Tg=-30°C) was used as an aromatic aliphatic polyester. "Bionole 1003" manufactured by Showa Highpolymer Co., Ltd., (Tg is 0°C or less, △Hm=58 J/g) was used as an aliphatic polyester. Talc ("Micro Ace L1", manufactured by Japan Talc Co., Ltd.) was used as a silicate compound. "Nature Works 4031D", "Ecoflex", "Bionole 1003", "Micro Ace L1", and titanium oxide were dry-blended in a mass ratio of 50:10:30:10:1. Thereafter, these were compounded using a 40 mm$\phi$ small same direction biaxial extruder manufactured by Mitsubishi Heavy Industry Co. , Ltd. at an extrusion temperature of 180°C and pelletized. The obtained pellets were injectionmolded using an injection molding machine "IS50E" manufactured by Toshiba Machine Co. , Ltd. (diameter of screw: 25 mm) to form a plate of L 100 mm $\times$ W 100 mm $\times$ t 3 mm (hereinafter, referred to as "3-mm plate"). Main molding conditions were as follows.

1) Temperature conditions: a cylinder temperature (195°C), a mold temperature (25°C).
2) Injection conditions: injection pressure (110 MPa), an injection time (1.5 seconds), aholdingpressure (80 MPa), a holding time (3.0 seconds).
3) Metering conditions: Screw rotation number (110 rpm), and a back pressure (10 MPa).

Then, the obtained plate type injection molded article was evaluated for color fastness and for staining property. Table 9 shows the results obtained.

(Comparative Example III-1)

An injection molded article was prepared in the same manner as that in Example III-1 except that "Nature Works 4031D" and "Bionole 1003" were dry-blended in a mass ratio of 80:20 as shown in Table 9. The obtained injection molded article was evaluated similarly to Example III-1. Table 9 shows the results obtained.

(Comparative Example III-2)

Titanium oxide was further used in Comparative Example III-1. An injection molded article was prepared in the same manner as that in Example III-1 except that "Nature Works 4031D", "Bionole 1003", and titanium oxide were dry-blended in a mass ratio of 80:20:7 as shown in Table 9. The obtained injection molded article was evaluated similarly to Example III-1. Table 9 shows the results obtained.

Table 9

| | | | Example III-1 | Comparative Example III-1 | Comparative Example III-2 |
|---|---|---|---|---|---|
| Resin | Nature Works 4031D | | 50 | 80 | 80 |
| | Ecoflex F ($\Delta$ Hm=21. 0J/g) | | 10 | | |
| | Bionole 1003 ($\Delta$ Hm=58 J/g) | | 30 | 20 | 20 |
| Talc | Micro Ace L1 | | 10 | | |
| Titanium oxide | | | 1 | | 7 |
| Color fastness | | 50 Hours | ○ | × | ○ |
| | | 100 Hours | ○ | × | ○ |
| | | 200 Hours | ○ | × | ○ |
| | | 500 Hours | ○ | × | ○ |
| | | Color fastness Judgment | Acceptable | Unacceptable | Acceptable |
| Staining | | a. Light green | ○ | ○ | × |
| | | b. Mellow | ○ | ○ | × |
| | | c. Orange | ○ | ○ | × |
| | | Staining judgment | Acceptable | Acceptable | Unacceptable |
| Overall evaluation | | | Acceptable | Unacceptable | Unacceptable |

Table 9 demonstrated that the injection molded article of Example III-1 had acceptable color fastness and acceptable staining property and were acceptable in overall evaluations. On the other hand, the injection molded articles of Comparative Examples of III-1 and III-2 were unacceptable in either one of the color fastness and the staining property and were unacceptable in overall evaluations.

That is, the injection molded articles of the present invention have excellent biodegradability and have an Izod impact strength (with a notch, 23°C) according to JISK-7110 of 15 kJ/m$^2$ or more and a deflection temperature under load according to JISK-7191 (method A, edge-wise) of 50°C or more, and reveal to be excellent in both the impact strength and heat resistance . Moreover, the blending amount of the lactic acid based resin can increase, which can provide the products stably and at low cost. When the resin composition is further blended with a hydrolysis preventing agent, the molded articles are not susceptible to hydrolysis due to moisture in the air or water from outside, thus causing no reduction in mechanical properties even when the molded articles are stored for a long time, used for a long time, or stored at high temperature and high humidity.

The resin compositions of the present invention are recyclable, so that they are resin compositions that can be adapted to environ-oriented society and are useful for preventing the global warming. Moreover, according to the present invention, exhausting resources can be saved.

Application of the resin compositions of the present invention is not limited to injection molding methods, injection compression molding methods. The resin composition of the present invention can be applied to e.g. extrusion molding methods, blow molding methods, press molding methods, or microcellular foaming methods. The resin composition of the present invention can be used, for example, for home electric appliance parts, automobile parts, daily commodities, and other general molded articles in the same manner as the conventional products made from general-purpose resins or together with such conventional products.

**Claims**

1. A resin composition comprising (A), (B) and (C):

   (A) a lactic acid based resin;
   (B) an aromatic aliphatic polyester having a glass transition temperature (Tg) of 0°C or less and a heat of crystal melting (∆Hm) of 5 J/g to 30 J/g, wherein the aromatic aliphatic polyester is a polyester having introduced an aromatic ring between aliphatic chains, and/or an aliphatic polyester other than the lactic acid based resin, having a glass transition temperature (Tg) of 0°C or less and a heat of crystal melting (∆Hm) of 5 J/g to 30 J/g, and wherein the component (B), which component (B) is said aromatic aliphatic polyester and/or said aliphatic polyester other than the lactic acid based resin, has a content of 5 mass% to 25 mass%; and
   (C) an aliphatic polyester other than the lactic acid based resin, having a glass transition temperature (Tg) of 0°C or less and a heat of crystal melting of 50 J/g to 70 J/g, wherein said glass transition temperature and said heat of crystal melting (∆Hm) are measured in accordance with JIS-K 7121.

2. The resin composition according to claim 1, wherein the total amount of (A) and (B), which component (A) is the lactic acidbased resin and which component (B) is constituted by the aromatic aliphatic polyester having a glass transition temperature (Tg) of 0°C or less and a heat of crystal melting (∆Hm) of 5 J/g to 30 J/g, and/or the aliphatic polyester other than the lactic acid based resin, having a glass transition temperature (Tg) of 0°C or less and a heat of crystal melting (∆Hm) of 5 J/g to 30 J/g, is 90 mass% to 70 mass%, and the component (C), which component (C) is the aliphatic polyester other than the lactic acid based resin, having a glass transition temperature (Tg) of 0°C or less and a heat of crystal melting (∆Hm) of 50 J/g to 70 J/g is contained in an amount of 10 to 30 mass%, wherein the sum of amounts of (A), (B) and (C) is 100 mass% .

3. The resin composition according to claim 1 or 2, further comprising (D) an inorganic filler having a mean particle size of 1 μm to 5 μm within a range of 5 mass% to 20 mass% of the resin composition, wherein the sum of amounts of (A), (B), (C) and (D) is 100 mass%.

4. The resin composition according to any one of claims 1 to 3, further comprising 0.5 mass part to 10 mass parts of a carbodiimide compound based on a total of 100 mass parts of (A) the lactic acid based resin, (B) the aromatic aliphatic polyester having a glass transition temperature (Tg) of 0°C or less and a heat of crystal melting (∆Hm) of 5 J/g to 30 J/g, and/or the aliphatic polyester other than the lactic acid based resin, having a glass transition temperature (Tg) of 0°C or less and a heat of crystal melting (∆Hm) of 5 J/g to 30 J/g, and (C) the aliphatic polyester other than the lactic acid based resin, having a glass transition temperature (Tg) of 0°C or less and a heat of crystal melting (∆Hm) of 50 J/g to 70 J/g.

5. The resin composition according to any one of claims 1 to 4, further comprising 0.5 mass part to 5 mass parts of an ester compound having a molecular weight of 200 to 2,000 based on a total of 100 mass parts of (A) the lactic acidbased resin, (B) the aromatic aliphatic polyester having a glass transition temperature (Tg) of 0°C or less and a heat of crystal melting (∆Hm) of 5 J/g to 30 J/g, and/or the aliphatic polyester other than the lactic acid based resin, having a glass transition temperature (Tg) of 0°C or less and a heat of crystal melting (∆Hm) of 5 J/g to 30 J/g, and (C) the aliphatic polyester other than the lactic acid based resin, having a glass transition temperature (Tg) of 0°C or less and a heat of crystal melting (∆Hm) of 50 J/g to 70 J/g.

6. The resin composition according to any one of claims 1 to 5, further comprising 0.1 mass part to 5 mass parts of a hiding power improver having a refractive index of 2. 0 or more selected from the group consisting of titanium oxide, lead titanate, potassium titanate, zirconium oxide, zinc sulfide, antimony oxide and zinc oxide, based on a total of 100 mass parts of (A) the lactic acid based resin, (B) the aromatic aliphatic polyester having a glass transition temperature (Tg) of 0°C or less and a heat of crystal melting (∆Hm) of 5 J/g to 30 J/g, and/or the aliphatic polyester other than the lactic acid based resin, having a glass transition temperature (Tg) of 0°C or less and a heat of crystal melting (∆Hm) of 5 J/g to 30 J/g, and (C) the aliphatic polyester other than the lactic acid based resin, having a glass transition temperature (Tg) of 0°C or less and a heat of crystal melting (∆Hm) of 50 J/g to 70 J/g.

7. A molded article formed by injection molding the resin composition according to any one of claims 1 to 6.

8. The injection molded article according to claim 7, wherein the molded article formed by the injection molding is further crystallized at a temperature within a range of 60°C to 130°C.

**Patentansprüche**

1. Harzzusammensetzung, die (A), (B) und (C) umfasst:

   (A) ein milchsäurebasiertes Harz;
   (B) einen aromatisch-aliphatischen Polyester mit einer Glasübergangstemperatur (Tg) von 0°C oder weniger und einer Kristallschmelzwärme (ΔHm) von 5 J/g bis 30 J/g, wobei der aromatisch-aliphatische Polyester ein Polyester, der einen aromatischen Ring zwischen aliphatischen Ketten eingefügt hat, ist und/oder einen aliphatischen Polyester anders als das milchsäurebasierte Harz, mit einer Glasübergangstemperatur (Tg) von 0°C oder weniger und einer Kristallschmelzwärme (ΔHm) von 5 J/g bis 30 J/g, und wobei die Komponente (B), wobei die Komponente (B) der genannte aromatisch-aliphatische Polyester und/oder der genannte aliphatische Polyester anders als das milchsäurebasierte Harz ist, einen Anteil von 5 Massen% bis 25 Massen% hat; und
   (C) einen aliphatischen Polyester anders als das milchsäurebasierte Harz, mit einer Glasübergangstemperatur (Tg) von 0°C oder weniger und einer Kristallschmelzwärme von 50 J/g bis 70 J/g, wobei die genannte Glasübergangstemperatur und die genannte Kristallschmelzwärme (ΔHm) gemäß JIS-K 7121 gemessen werden.

2. Harzzusammensetzung gemäß Anspruch 1, wobei die gesamte Menge an (A) und (B), wobei die Komponente (A) das milchsäurebasierte Harz ist und wobei die Komponente (B) durch den aromatisch-aliphatischen Polyester mit einer Glasübergangstemperatur (Tg) von 0°C oder weniger und einer Kristallschmelzwärme (ΔHm) von 5 J/g bis 30 J/g und/oder den aliphatischen Polyester anders als das milchsäurebasierte Harz mit einer Glasübergangstemperatur (Tg) von 0°C oder weniger und einer Kristallschmelzwärme (ΔHm) von 5 J/g bis 30 J/g gebildet ist, 90 Massen% bis 70 Massen% ist, und die Komponente (C), wobei die Komponente (C) der aliphatische Polyester anders als das milchsäurebasierte Harz mit einer Glasübergangstemperatur (Tg) von 0°C oder weniger und einer Kristallschmelzwärme (ΔHm) von 50 J/g bis 70 J/g ist, in einer Menge von 10 bis 30 Massen% enthalten ist, wobei die Summe der Mengen an (A), (B) und (C) 100 Massen% ist.

3. Harzzusammensetzung gemäß Anspruch 1 oder 2, die weiterhin (D) einen anorganischen Füllstoff mit einer mittleren Partikelgröße von 1 μm bis 5 μm innerhalb eines Bereichs von 5 Massen% bis 20 Massen% der Harzzusammensetzung umfasst, wobei die Summe der Mengen an (A), (B), (C) und (D) 100 Massen% ist.

4. Harzzusammensetzung gemäß einem der Ansprüche 1 bis 3, die weiterhin 0,5 Massenteile bis 10 Massenteile einer Carbodiimidverbindung, basierend auf einer Gesamtheit von 100 Massenteilen (A) des milchsäurebasierten Harzes, (B) des aromatisch-aliphatischen Polyesters mit einer Glasübergangstemperatur (Tg) von 0°C oder weniger und einer Kristallschmelzwärme (ΔHm) von 5 J/g bis 30 J/g und/oder des aliphatischen Polyesters anders als das milchsäurebasierte Harz, mit einer Glasübergangstemperatur (Tg) von 0°C oder weniger und einer Kristallschmelzwärme (ΔHm) von 5 J/g bis 30 J/g, und (C) des aliphatischen Polyesters anders als das milchsäurebasierte Harz, mit einer Glasübergangstemperatur (Tg) von 0°C oder weniger und einer Kristallschmelzwärme (ΔHm) von 50 J/g bis 70 J/g, umfasst.

5. Harzzusammensetzung gemäß einem der Ansprüche 1 bis 4, die weiterhin 0,5 Massenteile bis 5 Massenteile einer Esterverbindung mit einem Molekulargewicht von 200 bis 2000, basierend auf einer Gesamtheit von 100 Massenteilen (A) des milchsäurebasierten Harzes, (B) des aromatisch-aliphatischen Polyesters mit einer Glasübergangstemperatur (Tg) von 0°C oder weniger und einer Kristallschmelzwärme (ΔHm) von 5 J/g bis 30 J/g und/oder des aliphatischen Polyesters anders als das milchsäurebasierte Harz, mit einer Glasübergangstemperatur (Tg) von 0°C oder weniger und einer Kristallschmelzwärme (ΔHm) von 5 J/g bis 30 J/g und (C) des aliphatischen Polyesters anders als das milchsäurebasierte Harz, mit einer Glasübergangstemperatur (Tg) von 0°C oder weniger und einer Kristallschmelzwärme (ΔHm) von 50 J/g bis 70 J/g, umfasst.

6. Harzzusammensetzung gemäß einem der Ansprüche 1 bis 5, die weiterhin 0,1 Massenteile bis 5 Massenteile eines Deckkraftverstärkers mit einem Brechungsindex von 2,0 oder mehr, ausgewählt aus der Gruppe, bestehend aus Titanoxid, Bleititanat, Kaliumtitanat, Zirkoniumoxid, Zinksulfid, Antimonoxid und Zinkoxid, basierend auf einer Gesamtheit von 100 Massenteilen (A) des milchsäurebasierten Harzes, (B) des aromatisch-aliphatischen Polyesters mit einer Glasübergangstemperatur (Tg) von 0°C oder weniger und einer Kristallschmelzwärme (ΔHm) von 5 J/g bis 30 J/g und/oder des aliphatischen Polyesters anders als das milchsäurebasierte Harz, mit einer Glasübergangstemperatur (Tg) von 0°C oder weniger und einer Kristallschmelzwärme (ΔHm) von 50 J/g bis 30 J/g, und (C) des aliphatischen Polyesters anders als das milchsäurebasierte Harz, mit einer Glasübergangstemperatur (Tg) von 0°C oder weniger und einer Kristallschmelzwärme (ΔHm) von 50 J/g bis 70 J/g, umfasst.

**7.** Geformter Artikel, gebildet durch Spritzgießen der Harzzusammensetzung gemäß einem der Ansprüche 1 bis 6.

**8.** Durch Spritzguss geformter Artikel gemäß Anspruch 7, wobei der geformte Artikel, der durch Spritzgießen geformt wurde, weiterhin bei einer Temperatur innerhalb eines Bereichs von 60°C bis 130°C kristallisiert.

**Revendications**

**1.** Composition de résine comprenant (A), (B) et (C) :

(A) une résine à base d'acide lactique ;
(B) un polyester aliphatique aromatique ayant une température de transition vitreuse (Tg) de 0°C ou moins et une chaleur de fusion de cristal (ΔHm) de 5 J/g à 30 J/g, le polyester aliphatique aromatique étant un polyester ayant introduit un cycle aromatique entre des chaînes aliphatiques, et/ou un polyester aliphatique autre que la résine à base d'acide lactique, ayant une température de transition vitreuse (Tg) de 0°C ou moins et une chaleur de fusion de cristal (ΔHm) de 5 J/g à 30 J/g, le composant (B), lequel composant (B) étant ledit polyester aliphatique aromatique et/ou ledit polyester aliphatique autre que la résine à base d'acide lactique, ayant une teneur de 5 % en masse à 25 % en masse ; et
(C) un polyester aliphatique autre que la résine à base d'acide lactique, ayant une température de transition vitreuse (Tg) de 0°C ou moins et une chaleur de fusion de cristal de 50 J/g à 70 J/g, dans laquelle ladite température de transition vitreuse et ladite chaleur de fusion de cristal (ΔHm) sont mesurées conformément à JIS-K 7121.

**2.** Composition de résine selon la revendication 1, dans laquelle la quantité totale de (A) et (B), lequel composant (A) est la résine à base d'acide lactique et lequel composant (B) est constitué par le polyester aliphatique aromatique ayant une température de transition vitreuse (Tg) de 0°C ou moins et une chaleur de fusion de cristal (ΔHm) de 5 J/g à 30 J/g, et/ou le polyester aliphatique autre que la résine à base d'acide lactique ayant une température de transition vitreuse (Tg) de 0°C ou moins et une chaleur de fusion de cristal (ΔHm) de 5 J/g à 30 J/g, est de 90 % en masse à 70 % en masse, et le composant (C), lequel composant (C) est le polyester aliphatique autre que la résine à base d'acide lactique, ayant une température de transition vitreuse (Tg) de 0°C ou moins et une chaleur de fusion de cristal (ΔHm) de 50 J/g à 70 J/g est contenu dans une quantité de 10 à 30 % en masse, dans laquelle la somme des quantités de (A), (B) et (C) est de 100 % en masse.

**3.** Composition de résine selon la revendication 1 ou 2, comprenant en outre (D) une charge inorganique ayant une taille de particule moyenne de 1 μm à 5 μm dans une plage de 5 % en masse à 20 % en masse de la composition de résine, dans laquelle la somme des quantités de (A), (B), (C) et (D) est de 100 % en masse.

**4.** Composition de résine selon l'une quelconque des revendications 1 à 3, comprenant en outre 0,5 partie en masse à 10 parties en masse d'un composé de carbodiimide sur la base d'un total de 100 parties en masse de (A) la résine à base d'acide lactique, (B) le polyester aliphatique aromatique ayant une température de transition vitreuse (Tg) de 0°C ou moins et une chaleur de fusion de cristal (ΔHm) de 5 J/g à 30 J/g, et/ou le polyester aliphatique autre que la résine à base d'acide lactique, ayant une température de transition vitreuse (Tg) de 0°C ou moins et une chaleur de fusion de cristal (ΔHm) de 5 J/g à 30 J/g, et (C) le polyester aliphatique autre que la résine à base d'acide lactique, ayant une température de transition vitreuse (Tg) de 0°C ou moins et une chaleur de fusion de cristal (ΔHm) de 50 J/g à 70 J/g.

**5.** Composition de résine selon l'une quelconque des revendications 1 à 4, comprenant en outre 0,5 partie en masse à 5 parties en masse d'un composé d'ester ayant un poids moléculaire de 200 à 2 000 sur la base d'un total de 100 parties en masse de (A) la résine à base d'acide lactique, (B) le polyester aliphatique aromatique ayant une température de transition vitreuse (Tg) de 0°C ou moins et une chaleur de fusion de cristal (ΔHm) de 5 J/g à 30 J/g, et/ou le polyester aliphatique autre que la résine à base d'acide lactique, ayant une température de transition vitreuse (Tg) de 0°C ou moins et une chaleur de fusion de cristal (ΔHm) de 5 J/g à 30 J/g, et (C) le polyester aliphatique autre que la résine à base d'acide lactique, ayant une température de transition vitreuse (Tg) de 0°C ou moins et une chaleur de fusion de cristal (ΔHm) de 50 J/g à 70 J/g.

6. Composition de résine selon l'une quelconque des revendications 1 à 5, comprenant en outre 0,1 partie en masse à 5 parties en masse d'un améliorant de pouvoir couvrant ayant un indice de réfraction de 2,0 ou plus choisi dans le groupe constitué par l'oxyde de titane, le titanate de plomb, le titanate de potassium, l'oxyde de zirconium, le sulfure de zinc, l'oxyde d'antimoine et l'oxyde de zinc, sur la base d'un total de 100 parties en masse de (A) la résine à base d'acide lactique, (B) le polyester aliphatique aromatique ayant une température de transition vitreuse (Tg) de 0°C ou moins et une chaleur de fusion de cristal (ΔHm) de 5 J/g à 30 J/g, et/ou le polyester aliphatique autre que la résine à base d'acide lactique, ayant une température de transition vitreuse (Tg) de 0°C ou moins et une chaleur de fusion de cristal (ΔHm) de 5 J/g à 30 J/g, et (C) le polyester aliphatique autre que la résine à base d'acide lactique, ayant une température de transition vitreuse (Tg) de 0°C ou moins et une chaleur de fusion de cristal (ΔHm) de 50 J/g à 70 J/g.

7. Article moulé formé par moulage par injection de la composition de résine selon l'une quelconque des revendications 1 à 6.

8. Article moulé par injection selon la revendication 7, dans lequel l'article moulé formé par le moulage par injection est en outre cristallisé à une température dans une plage de 60°C à 130°C.

*FIG.1A*

*FIG.1B*

**EP 1 561 785 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP HEI11116784 B
- JP 2002128918 A
- JP HEI1087976 B